# EUROPÄISCHE PATENTSCHRIFT

(11) **EP 2 196 670 B1**
(45) Veröffentlichungstag und Bekanntmachung des Hinweises auf die Patenterteilung: **19.07.2017**
(21) Anmeldenummer: 09014530.1
(22) Anmeldetag: 20.11.2009
(51) Int. Cl.: F04B 37/14

(54) **MIT EINER VAKUUMKOMPONENTE VERBINDBARES GERÄT**
DEVICE WHICH CAN BE CONNECTED WITH A VACUUM COMPONENT
APPAREIL POUVANT ÊTRE CONNECTÉ AVEC UN COMPOSANT SOUS VIDE

(30) Priorität: 10.12.2008 DE 102008061435
(43) Veröffentlichungstag der Anmeldung: 16.06.2010
(73) Patentinhaber: PFEIFFER VACUUM GMBH, 35614 Asslar (DE)
(72) Erfinder: Böttcher, Jochen, 35394 Gießen (DE)
(74) Vertreter: Manitz Finsterwald Patentanwälte PartmbB

(56) Entgegenhaltungen:
- EP-A1- 0 597 365
- US-A1- 2005 021 890

## Beschreibung

Die Erfindung betrifft ein mit einer Vakuumkomponente verbindbares Gerät nach dem Oberbegriff des ersten Anspruchs und eine Vakuumkomponente nach dem Oberbegriff des sechsten Anspruchs.

In der Vakuumtechnik werden zur Steuerung und Überwachung von Geräten und Anlagenteilen unterschiedliche Schnittstellen genutzt. Dies sind neben diskreten digitalen und analogen Ein- und Ausgängen sowohl in der Automatisierungstechnik etablierte Bussysteme als auch herstellerspezifische proprietäre serielle Schnittstellen. Die Gesamtheit wird im Weiteren allgemein mit Schnittstellen bezeichnet. Meist existieren zusätzliche Verbindungen, die nur im Wartungs- oder Servicefall genutzt werden.

Die Zurverfügungstellung mehrerer Schnittstellen kann entweder dadurch realisiert werden, dass ein mit einer Vakuumkomponente verbindbares Gerät mehrere Schnittstellen parallel anbietet oder aber indem mehrere Varianten existieren, die dann nur die benötigten Schnittstellen bieten.

Im ersten Fall wird das Gerät größer und teurer, als es tatsächlich nötig ist, da Steckverbinder und Schaltungsteile implementiert werden müssen, die nicht oder nur selten benötigt werden. Alle zusätzlichen Steckverbinder benötigen zudem Platz am Gehäuse des Geräts, um korrekt angeschlossen und vernünftig gehandhabt werden zu können.

Im zweiten Fall ergibt sich ein erhöhter logistischer Aufwand bei Fertigung und Vertrieb des Geräts, da alle theoretischen Varianten vorgehalten und gepflegt werden müssen. Zudem ergibt sich oft erst im Einsatz beim Kunden die Notwendigkeit zusätzlicher Schnittstellen, z.B. für Service- und Diagnosezwecke oder zur Evaluierung durch Handbetrieb.

Grundsätzlich ergibt sich zudem das Problem der Priorisierung der Schnittstellen, wenn z.B. sich Steuersignale von mehreren aktiven Schnittstellen widersprechen.

In US 2005/0021890 A1 wird - grundsätzlich unabhängig von einer Vakuumanwendung - eine Multi-Protokoll-Schnittstelle offenbart, bei der die verschiedenen Kontakte eines Anschlusses über Multiplexer auf jeweils andere Weise mit gegebenenfalls unterschiedlichen Transceivern verbunden werden können. Die Multiplexer werden dabei mittels eines Schnittstellen-Controllers geschaltet, der über einen eigens dafür vorgesehenen Kontakt des Anschlusses von dem jeweils angeschlossenen Gerät ein Identifikationssignal erhält und in Abhängigkeit von diesem Identifikationssignal die jeweils zu verwendende Schnittstelle vorgibt. Eine exemplarische Vakuumpumpe ist etwa aus EP 0 597 365 A1 bekannt.

Es ist eine Aufgabe der Erfindung, ein Gerät vorzustellen, welches die Funktionalität mehrerer Steckverbinder bietet und dabei die vorgenannten Nachteile vermeidet.

Diese Aufgabe wird gelöst durch ein Gerät mit den Merkmalen des 1. Patentanspruchs und einer Vakuumkomponente mit den Merkmalen des 6. Patentanspruchs. Die abhängigen Ansprüche 2 bis 5 geben vorteilhafte Weiterbildungen der Erfindung an.

Die Grundidee ist, dieselben Kontakte eines Steckverbinders mehrfach belegen und zwischen den Belegungen umschalten zu können. Hierzu wird zwischen dem Steckverbinder und nachfolgenden Signalverarbeitungseinheiten eine Weiche angeordnet, die wahlweise eine der Signalverarbeitungseinheiten mit dem Steckverbinder verbindet. Steckverbinder bezeichnet in diesem Zusammenhang ein mechanisches Bauteil, welches einen elektrischen Kontakt zwischen zwei elektrischen Leitungsabschnitten herstellt.

Durch diese Maßnahme werden Steckverbinder am Gehäuse eingespart, es ist weniger Raum für diese vorzusehen. Da durch die Erfindung der Steckverbinder eines einzelnen Geräts für viele verschiedene Schnittstellenarten benutzt werden kann, ist die Herstellung einfacher, der logistische Aufwand sinkt und somit sinken auch die Herstellungskosten. Das Gerät baut kompakter und übersichtlicher. Diese Vorteile werden auch erzielt, wenn die Vakuumkomponente ein Gerät mit einem solchen Steckverbinder umfasst.

Zudem ist eine Zuordnungseinheit vorzusehen. Diese ist so gestaltet, dass sie die auf den Kontakten des Steckverbinders von außen angelegten Ströme und Spannungen misst und daraus ableitet, welche Signalverarbeitungseinheit zu verbinden ist. Diese automatische Erkennung vereinfacht die Bedienung erheblich und vermeidet Fehler bei der Verbindung.

In einer Weiterbildung ist eine Schalteinheit vorgesehen, die die Weiche umschaltet. Dies bringt den Vorteil eines ferngesteuerten Umschaltens der Weiche mit sich.

Die Ansprüche 3 und 4 geben vorteilhafte Gestaltungen der Signalverarbeitungseinheit an, die die Handhabung vieler verschiedener Kommunikationsstandards ermöglichen.

Die Erfindung kann derart weitergebildet werden, dass der Steckverbinder wenigstens zwei Gruppen von Kontakten aufweist und die Weiche mit einer Gruppe von Kontakten verbunden ist. Dies erlaubt es, mit einem Steckverbinder sowohl Schnittstellen abzubilden als auch weitere Signale oder Versorgungsspannungen handzuhaben. Dies bedeutet eine zunehmend kompakte Gestaltung des Geräts.

Anhand eines Ausführungsbeispieles soll die Erfindung näher erläutert, die Darstellung ihrer Vorteile vertieft und Weiterbildungen beschrieben werden.

Es zeigen:
- Fig. 1:: Anordnung mit Gerät und Vakuumkomponente.
- Fig. 2:: Schematische Darstellung der Schaltung.
- Fig. 3:: Detailliertere Darstellung der Schaltung.
- Fig. 4:: Schematische Darstellung der Schaltung in einer ersten Weiterbildung.

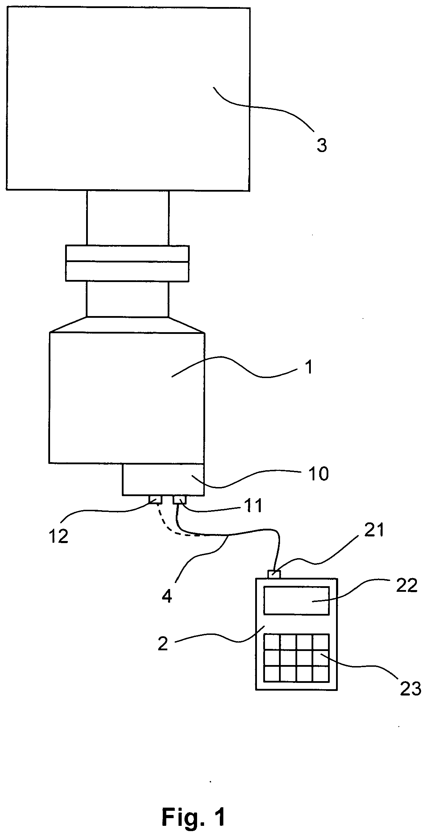

In Figur 1 ist eine Anordnung mit einer Vakuumkomponente 1 und einem Gerät 2 gezeigt. Die Vakuumkomponente ist in diesem Beispiel eine Vakuumpumpe, es kann sich jedoch auch um eine andere Vakuumkomponente wie beispielsweise Lecksucher und Druckmessgerät handeln. Die Vakuumpumpe ist an eine Vakuumkammer 3 angeschlossen und evakuiert diese. Die Vakuumkammer kann ein Massenspektrometer, ein Prozessraum, ein Beschichtungsanlage oder ähnliches sein. An der Vakuumpumpe ist ein Steuergerät 10 angeordnet, welches die Pumpwirkung der Vakuumpumpe steuert, beispielsweise durch die Bestromung eines Motors der Vakuumpumpe. Das Steuergerät dient außerdem dazu, in der Vakuumpumpe vorhandene Sensoren auszulesen. Es weist Anschlüsse 11 und 12 auf, mit denen externe Geräte mit dem Steuergerät verbunden werden können. Dies erlaubt die Einbindung der Vakuumpumpe in eine umfangreiche Anlage und die Steuerung der Vakuumpumpe durch eine zentrale Anlagensteuerung. Alternativ oder zusätzlich dazu kann die Vakuumpumpe dauerhaft überwacht werden.

In dem hier betrachteten Beispiel ist der Steckverbinder 21 eines Gerät 2 mittels einer Anschlussleitung 4 mit dem Steuergerät verbunden. Dieses Gerät weist ein Bedienfeld 23 und ein Anzeigefeld 22 auf. Das Anzeigefeld, beispielsweise ein Display, dient zur Anzeige von aus dem Steuergerät ausgelesenen Werten. Bei diesen handelt es sich beispielsweise um Angaben zur Drehzahl, Leistungsaufnahme, Temperatur und dergleichen mehr. Über das Bedienfeld erfolgt die Eingabe von Werten, die dann an das Steuergerät übergeben werden. Beispielsweise können Parameter gesetzt werden, wie Leerlaufdrehzahl und dergleichen. Anzeigefeld und Bedienfeld können auch integriert in Form eines Touchscreens gestaltet sein.

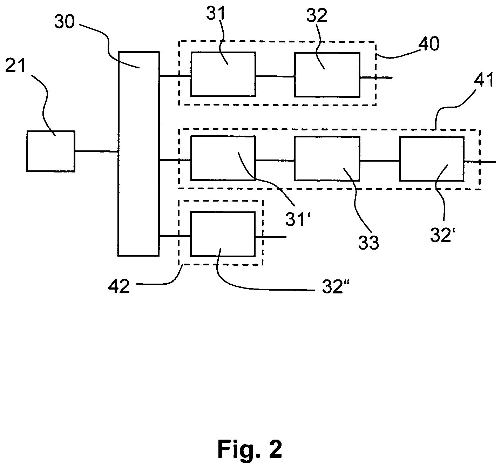

In Figur 2 zeigt eine schematische Darstellung der elektronischen Schaltung, die in dem Gerät 2 vorgesehen und mit dem Steckverbinder 21 verbunden ist. Mit dem Steckverbinder steht die Weiche 30 in elektrischem Kontakt. Mit ihr wird eine der Signalverarbeitungseinheiten 40, 41 und 42 ausgewählt, so dass die betreffende Signalverarbeitungseinheit mit dem Steckverbinder elektrisch verbunden ist. Die Signalverarbeitungseinheiten können ihrerseits wiederum mit weiterer Elektronik wie beispielsweise einem oder mehreren Mikrokontrollern verbunden sein. Die Funktionen der Signalverarbeitungseinheiten sind insbesondere Pegelwandlungen der am Steckverbinder anliegenden Spannungen und die Interpretation und Erzeugung von über den Steckverbinder übertragenen Bit- und Byteströmen.

Für den inneren Aufbau der Signalverarbeitungseinheiten gibt es verschiedene Möglichkeiten. Diese Möglichkeiten sind in Figur 2 schematisch gezeigt.

Die Signalverarbeitungseinheit 40 umfasst einen mit der Weiche verbundenen Treiber 31. Treiber bezeichnet an dieser und den folgenden Stellen dieses Textes nicht nur eine elektrische Signalanpassung, sondern auch eine Trennung, beispielsweise galvanisch, oder die Umsetzung auf andere Signalformen, beispielsweise optisch oder per Funk, wobei Trennung und Umsetzung auch zusammen angewendet sein können. Mit dem Treiber ist ein Interpreter 32 verbunden. Ein Interpreter ist beispielsweise ein Mikrocontroller oder ein vergleichbares Bauteil wie ASIC (Application Specific Integrated Circuit), CPLD (Complex Programmable Logic Device) oder FPGA (Field Programmable Gate Array). Er kann zudem in verschiedenen Stufen Unterinstanzen enthalten, beispielsweise integrierte Controller, die den CAN-Datenverkehr (Controller Area Network) auf Telegrammebene abhandeln, während die Telegramme zu Protokollen in der höheren Instanz zusammengefaßt und behandelt werden.

Die Signalverarbeitungseinheit 41 umfasst zusätzlich einen zwischen Treiber 31' und Interpreter 32' angeordneten UART (Universal Asynchronous Receiver Transmitter) 33, dessen Funktion ist, einen seriellen digitalen Datenstrom aufzubauen.

Die Signalverarbeitungseinheit 42 umfasst einen Interpreter 32".

Die Interpreter 32, 32' und 32" sind mit den weiteren Bestandteilen der Elektronik des Geräts verbunden.

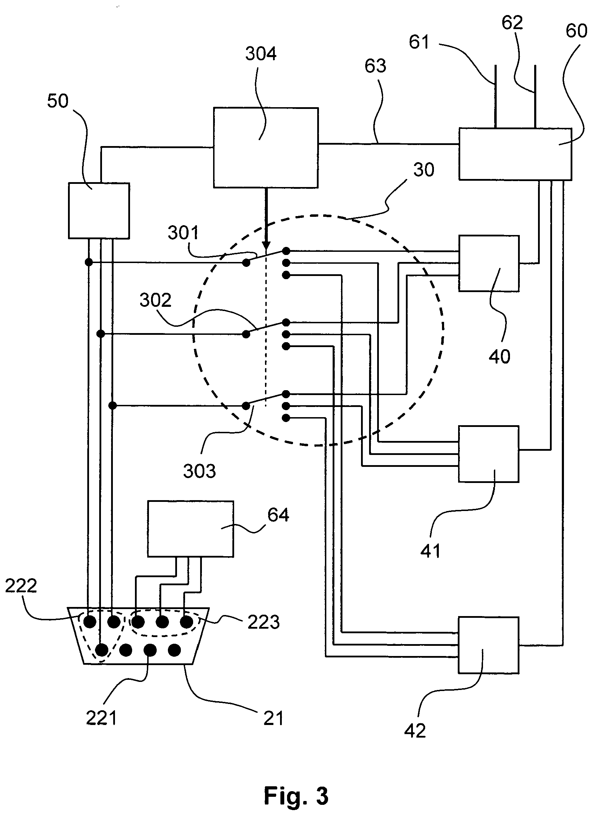

Figur 3 zeigt den schematischen Aufbau der Schaltung des Geräts detaillierter, insbesondere im Bereich der Weiche und des Steckverbinders.

Der Steckverbinder 21 weist mehrere Kontakte 221 auf. Diese Kontakte sind in Kontaktgruppen 222 und 223 eingeteilt, wobei die Kontaktgruppen mit verschiedenen elektronischen Bestandteilen des Geräts in Verbindung stehen.

Die Kontaktgruppe 223 ist mit einer elektronischen Komponente 64 des Geräte verbunden, beispielsweise einem Schaltkreis zur Verteilung von Betriebsspannung oder ähnliches.

Die Kontaktgruppe 222 ist mit der Weiche 30 verbunden, welche ihrerseits an die Signalverarbeitungseinheiten 40, 41 und 42 angeschlossen ist. Die Signalverarbeitungseinheiten stehen in Kontakt mit der Verarbeitungseinheit 60. Im gezeigten Beispiel wertet diese das Bedienfeld aus und steuert das Anzeigefeld an, wofür eine Bedienfeldzuleitung 61 und eine Anzeigefeldzuleitung 62 vorgesehen sind.

Die Weiche 30 weist Schalter 301, 302 und 303 auf. Mit diesen werden die Zuleitungen zwischen den Kontakten und der Weiche mit den Zuleitungen zwischen Weiche und der gewünschten Signalverarbeitungseinheit verbunden. Eine Umschaltung der Schalter bewirkt somit die Auswahl einer Signalverarbeitungseinheit, die dann mit der Kontaktgruppe 222 in Verbindung steht. Die Erfindung erlaubt es daher, dass die Verarbeitungseinheit des Geräts über einen einzigen Steckverbinder wahlweise mit unterschiedlichen Standards mit einem externen Gerät, beispielsweise dem Steuergerät 10, kommuniziert. Beispielsweise ermöglicht sie die Umschaltung zwischen CAN-Schnittstelle und RS485.

Die Umschaltung der Schalter wird von einer Schalteinheit 304 bewirkt. Die Schalteinheit kann einen oder mehrere Wege der Weiche freischalten. Die Entscheidung hierüber kann per Hand durch den Benutzer es Geräts erfolgen oder über einen Bestandteil der Elektronik des Geräts, beispielsweise einen Mikrocontroller, der hierfür verschiedene Verfahren heranziehen kann, beispielsweise zyklisches Umschalten der Weiche oder Lauschen auf allen Wegen der Weiche parallel, bis passende Signale gefunden sind. Im gezeigten Beispiel ist eine Steuerleitung 63 zwischen Schalteinheit 304 und Verarbeitungseinheit 60 vorgesehen, über die diese die Umschaltung veranlasst. Um eine automatische Umschaltung zu erreichen, ist eine Zuordnungseinheit 50 an die Kontaktgruppe 222 angeschlossen. Diese ist so gestaltet, dass sie die an den Kontakten der Kontaktgruppe 222 anliegenden Pegel erkennt, beispielsweise solche, die für eine serielle Kommunikation charakterisch sind, und daraus die zu verbindende Signalverarbeitungseinheit 40, 41 oder 42 bestimmt, beispielsweise die für serielle Kommunikation ausgelegte Signalverarbeitungseinheit. Zwischen Zuordnungseinheit und Schalteinheit ist eine Verbindung vorgesehen, über die die Zuordnungseinheit die Umschaltung der Weiche veranlasst.

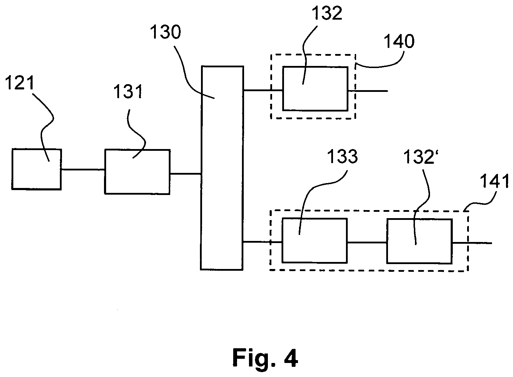

Figur 4 zeigt in einer schematischen Darstellung eine Weiterbildung des Aufbaus. In dieser Weiterbildung ist zwischen der Weiche 130 und dem Steckverbinder 121 ein Treiber 131 angeordnet. An die Weiche sind Signalverarbeitungseinheiten 140 und 141 angeschlossen, zwischen denen die Weiche umschaltet und dementsprechend wahlweise eine der Signalverarbeitungseinheiten 140 und 141 mit dem Steckverbinder verbindet. Die Signalverarbeitungseinheit weist einen Interpreter 132 auf, die Signalverarbeitungseinheit 141 besitzt einen mit der Weiche verbundenen UART 133 und einen an diesen angeschlossenen Interpreter 132'.

Die an dem Gerät 2 gezeigte Gestaltung des Steckverbinders und der mit ihm verbundenen Elektronik kann vorteilhaft auf einen der Anschlüsse 11 und 12 des Steuergeräts 10 angewandt werden. Die Anwendung erlaubt dort insbesondere zu einer Verringerung der Anzahl der Anschlüsse. Die Schaltungen gemäß Fig. 2 bis 4 werden dann im Steuergerät in Verbindung mit dem Anschluss eingesetzt. In diesem Fall ist die in Fig. 3 gezeigte Verarbeitungseinheit 60 so gestaltet, dass sie die Steuerung des Motors der Vakuumpumpe und das Auslesen der Sensoren übernimmt. Die Zuleitungen 61 und 62 sind als Motorzuleitung und Sensorikzuleitung ausgebildet.

## Patentansprüche

1. Mit einer Vakuumkomponente (1) verbindbares Gerät (2) mit einem Steckverbinder (21; 121), mit einer ersten und einer zweiten Signalverarbeitungseinheit (40, 41), einer Verbindung zwischen Signalverarbeitungseinheit und Steckverbinder,
wobei in der Verbindung zwischen Steckverbinder und Signalverarbeitungseinheit eine Weiche (30; 130) angeordnet ist **dadurch gekennzeichnet,**
**dass** das Gerät (2) eine Zuordnungseinheit (50) umfasst, die so gestaltet ist, dass sie auf Kontakten des Steckverbinders von außen angelegte Ströme und Spannungen misst und daraus ableitet, welche Signalverarbeitungseinheit (40, 41) zu verbinden ist.

2. Gerät nach einem der vorhergehenden Ansprüche,
**dadurch gekennzeichnet,**
**dass** eine Schalteinheit (304) vorgesehen ist, welche die Weiche (30; 130) von erster auf zweite Signalverarbeitungseinheit (40, 41, 42) umschaltet.

3. Gerät nach einem der vorhergehenden Ansprüche,
**dadurch gekennzeichnet,**
**dass** wenigstens eine Signalverarbeitungseinheit (40, 41, 42) ein Mittel zur Umwandlung elektrischer Spannungspegel umfasst.

4. Gerät nach einem der vorhergehenden Ansprüche,
**dadurch gekennzeichnet,**
**dass** wenigstens eine Signalverarbeitungseinheit (40, 41, 42) einen Interpreter (32, 32', 32") umfasst.

5. Gerät nach einem der vorhergehenden Ansprüche,
**dadurch gekennzeichnet,**
**dass** der Steckverbinder (21; 121) wenigstens eine erste (222) und eine zweite (223) Gruppe von Kontakten aufweist und die Weiche (30; 130) mit einer Gruppe von Kontakten verbunden ist.

6. Vakuumkomponente (1),
**dadurch gekennzeichnet,**
**dass** sie ein Gerät (10) nach Anspruch 1 bis 5 umfasst.

## Claims

1. A device (2) connectable to a vacuum component (1), the device comprising a plug connector (21; 121); a first and a second signal processing unit (40, 41); and a connection between the signal processing unit and the plug connector,
wherein a switch (30; 130) is arranged in the connection between the plug connector and the signal processing unit,
**characterized in that**
the device (2) comprises an association unit (50) which is designed such that it measures currents and voltages applied to contacts of the plug connector from the outside and derives therefrom which signal processing unit (40, 41) is to be connected.

2. A device in accordance with one of the preceding claims,
**characterized in that**
a switching unit (304) is provided which switches over the switch (30; 130) from a first to a second signal processing unit (40, 41, 42).

3. A device in accordance with one of the preceding claims,
**characterized in that**
at least one signal processing unit (40, 41, 42) comprises a means for converting electrical voltage levels.

4. A device in accordance with any one of the preceding claims,
**characterized in that**
at least one signal processing unit (40, 41, 42) comprises an interpreter (32, 32', 32").

5. A device in accordance with any one of the preceding claims,
**characterized in that**
the plug connector (21; 121) has at least one first (222) and one second (223) group of contacts; and **in that** the switch (30; 130) is connected to a group of contacts.

6. A vacuum component (1),
**characterized in that**
it comprises a device (10) in accordance with claims 1 to 5.

## Revendications

1. Appareil (2) susceptible d'être connecté avec un composant sous vide (1) au moyen d'un connecteur à enfichage (21 ; 121), comprenant une première et une seconde unité de traitement de signal (40, 41), une liaison entre unité de traitement de signal et connecteur à enfichage,
dans lequel un aiguillage (30, 130) est agencé dans la liaison entre connecteur à enfichage et unité de traitement de signal,
**caractérisé en ce que**
l'appareil (2) inclut une unité d'association (50) qui est ainsi conçue qu'elle mesure les courants et les tensions appliqué(e)s de l'extérieur sur les contacts de connecteur à enfichage, et dérive de ces mesures quelle unité de traitement de signal (40, 41) il s'agit de relier.

2. Appareil selon l'une des revendications précédentes,
**caractérisé en ce qu'**il est prévu une unité de commutation (64) qui inverse l'aiguillage (30 ; 130) de la première vers la seconde unité de traitement de signal (40, 41, 42).

3. Appareil selon l'une des revendications précédentes,
**caractérisé en ce qu'**au moins une unité de traitement de signal (40, 41, 42) inclut un moyen pour la conversion d'un niveau de tension électrique.

4. Appareil selon l'une des revendications précédentes,
**caractérisé en ce qu'**au moins une unité de traitement de signal (40, 41, 42) inclut un moyen d'interprétation (32, 32', 32").

5. Appareil selon l'une des revendications précédentes,
**caractérisé en ce que** le connecteur à enfichage (21 ; 121) comprend au moins un premier (222) et un second (223) groupe de contacts, et l'aiguillage (30 ; 130) est relié à un groupe de contacts.

6. Composant sous vide (1),
**caractérisé en ce qu'**il inclut un appareil (10) selon les revendications 1 à 5.
